# EUROPEAN PATENT APPLICATION

(11) **EP 3 531 355 A1**
(43) Date of publication of application: **28.08.2019**
(21) Application number: 17862843.4
(22) Date of filing: 18.10.2017
(51) Int. Cl.: G06Q 20/04, G06F 3/0481, G06Q 30/02, G07B 11/00

(54) **PROGRAM**

(30) Priority: 21.10.2016 JP 2016207360
(71) Applicant: Playground Co., Ltd., Tokyo 150-0011 (JP)
(72) Inventor: ITO, Keiji, Tokyo 150-0011 (JP); KONO, Takahiro, Tokyo 150-0011 (JP)
(74) Representative: Müller-Boré & Partner Patentanwälte PartG mbB
(86) International application number: PCT/JP2017/037646
(87) International publication number: WO 2018/074504

(57) **Abstract**

It is an object of the present invention to provide an electronic ticket system and a program having high convenience. In an electronic ticket system including a user terminal having display means for displaying a ticket face of an electronic ticket, and an deletion means for deleting the electronic ticket selected by the user terminal, a program for causing the user terminal to realize a function of changing a ticket face of the electronic ticket displayed on the display means is provided.

## Description

### Technical Field

The present invention relates to a program for use in an electronic ticket system.

### Background Art

In recent years, with the popularization of portable terminals such as smartphones, there has been proposed an electronic ticket system for distributing electronic tickets in which admission tickets are converted into electronic data to the portable terminals, and determining admission permission or prohibition by checking the electronic tickets stored in the terminals of the attendance at the entrance.

For example, Patent Document 1 discloses an electronic ticket system performing a deletion operation by using a stamp capable of simultaneous multipoint contact with a screen of a smartphone. In the deletion operation, the electronic ticket are made into used by using electronic ticket and a stamp corresponding to the electronic ticket.

### Prior Art References

### Patent Document

Japanese Patent Application Laid-Open No. 2015-5275

### Summary of the Invention

### Problems to be solved by the Invention

As described above, although the electronic ticket system has been put into practical use, many systems simply replace the conventional paper ticket with a portable terminal, and it cannot be said that the merits of the electronic system have been fully utilized. In addition, inconveniences associated with the use of a portable terminal have also become apparent. An object of the present invention is to provide an electronic ticket system and a program having high convenience.

### Means for solving the Problems

In order to solve the above-mentioned problems, a program according to the present invention is a program used in an electronic ticket system including a user terminal having display means for displaying the face of an electronic ticket and an deletion means for deleting an electronic ticket selected by the user terminal, and the program is characterized in that the user terminal realizes a function of changing the face of an electronic ticket displayed on the display means.

According to the present invention, when the electronic ticket is deleted, the face of the electronic ticket to be displayed on the display means may be changed.

In the present invention, the electronic ticket may be an electronic ticket to which the designated seat is linked, and before the electronic ticket is deleted, the information of the designated seat may not be included in the ticket face of the electronic ticket displayed on the display means, and after the electronic ticket is deleted, the information of the designated seat may be included in the ticket face of the electronic ticket.

In the present invention, on condition that the electronic ticket is deleted, it is particularly preferable that the designated seat associated with the electronic ticket to be deleted is determined by lottery, and the designated seat determined by lottery is included in the face of the electronic ticket displayed on the display means after the electronic ticket is deleted.

In the present invention, the electronic ticket may be an electronic ticket of a designated seat to which the designated seat is linked, and the information of the designated seat may be displayed on the face of the electronic ticket displayed on the display means after the electronic ticket is deleted so as to be visually recognizable compared with the face of the electronic ticket displayed on the display means before the electronic ticket is deleted.

In the present invention, the face of the electronic ticket to be displayed on the display means may be changed at a predetermined time.

According to the present invention, the user terminal may include a position information acquiring means for acquiring the current position, and may change the face of the electronic ticket to be displayed on the display means on condition that the current position matches the condition of the predetermined position.

In the present invention, the user terminal may further include receiving means for receiving an instruction to change the face of the electronic ticket from the outside, and the face of the electronic ticket to be displayed on the display means may be changed on condition that the user terminal receives the instruction.

In the present invention, it is preferable to display a moving image on the ticket face to be displayed on the display means when the deletion is performed by the deletion means.

### Brief Description of the Drawings

Fig. 1 is a schematic diagram showing a configuration of an electronic ticket system 1.
Fig. 2 is a block diagram showing the configuration of the server 2.
Fig. 3 is a block diagram showing the configuration of the user terminal 3.
Fig. 4(a) is a side view of the stamp 4, and Fig. 4(b) is a bottom view of the stamp 4.
FIG. 5 is a flowchart showing a processing procedure of the electronic ticket system 1 at the time of purchasing an electronic ticket.
Fig. 6 shows an example of displaying a ticket face of an electronic ticket.
FIG. 7 is a flowchart showing a processing procedure of the electronic ticket system 1 when the electronic ticket is used.
Fig. 8(a) shows a label example of the ticket face before the deletion, and Fig. 8(b) shows a display example of the ticket face after the deletion.
Fig. 9(a) shows a label example of the ticket face before the deletion, and Fig. 9(b) shows a display example of the ticket face after the deletion.
Figs. 10(a) to 10(e) show examples of face displays of electronic tickets for simultaneous entry by a plurality of persons.
Fig. 11 is a schematic diagram showing a system configuration at a ticket inspection location.
FIG. 12 is a flowchart showing a processing procedure of the electronic ticket system 1 when the ticket type is changed.
Figs. 13(a) and 13(b) show an example of the face label of an electronic ticket when the ticket type is changed.
FIG. 14 is a flowchart showing a processing procedure of the electronic ticket system 1 when a wait for cancellation is accepted.
FIG. 15 is a flowchart showing a processing procedure of the electronic ticket system 1 when cancellation of a purchased electronic ticket is accepted.
Fig. 16 shows an example of face display of an electronic ticket when canceling a purchased electronic ticket.
FIG. 17 is a flowchart showing a processing procedure of the electronic ticket system 1 when a user wishes to swap a purchased electronic ticket.
Fig. 18 shows an example of a face display of an electronic ticket-when a purchased electronic ticket is swapped.

### Description of Embodiments

Embodiments of the present invention will be described below with reference to the drawings.

### [Basic configuration of electronic ticket system]

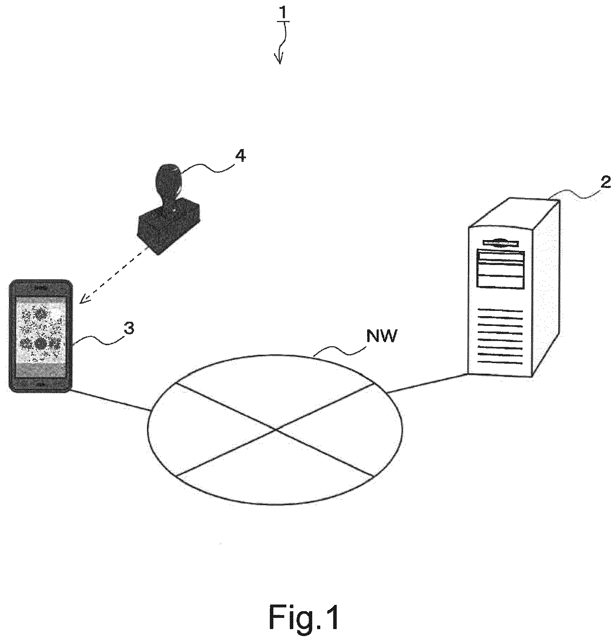

As shown in FIG. 1, the electronic ticket system 1 includes a server 2, a user terminal 3, and a stamp 4. The server 2 and the user terminal 3 are connected via a network NW such as the Internet. In addition, the electronic ticket system 1 may include a transmitter 6 such as a beacon, a checking terminal 7, a ticket stub issuing device, and the like as necessary.

### [Server Configuration]

The servers 2 are, for example, computer systems, and are composed of input/output devices such as a keyboard, a mouse, and a touch panel, a main body including a computing unit such as a CPU (Central Processing Unit) and storage devices such as a RAM (Random Access Memory) and a ROM (read only memory), and display devices such as CRTs (Cathode Ray Tube) and LCDs (Liquid Crystal Display).

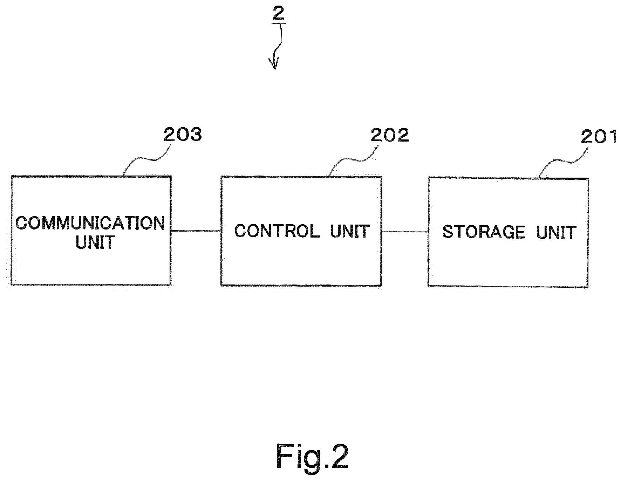

As shown in FIG. 2, the server 2 includes at least a storage unit 201, a control unit 202, and a communication unit 203. The storage unit 201 of the server 2 stores a program executed by the control unit 202, data used by the program, and the like. For example, the storage unit 201 stores a program for realizing the function of the server 2 in the electronic ticket system 1, a database DB relating to the electronic ticket managed by the electronic ticket system 1, a program for performing settlement processing, and the like. The server 2 does not have to be configured such that each of the above-described configurations is physically integrated. For example, some or all of the above-mentioned components may be distributed to remote locations, and they may cooperate to function as the server 2.

The database DB stores, as information on the electronic ticket, information on the ticket (e.g., unique ticket ID, exhibition ID, type of ticket (type of seat), seat number (in the case of a designated seat), deletion key, user ID of the purchaser, status (used/unused, etc.), face image (which may be information identifying the image data itself), cancellation stamp information (which may be character string or image data itself, or an ID indicating the image), information on the individual of the user (e.g., unique user ID, name, age, address, gender, other attributes, contact address (e-mail address, SNS), and information on the exhibition (e.g., exhibition ID, name of the exhibition, date of opening, place of opening, etc.)). If one user ID and one exhibition ID are linked to one ticket ID corresponding to one ticket and the ticket ID is specified, information on the user who purchased the ticket and information on the exhibition that can be entered with the ticket can be specified. When the user ID of the purchaser is not linked to the ticket ID (blank space), the ticket remains unsold, and it is understood that the ticket type and the seat associated with the ticket are vacant.

In addition, in order to realize various functions to be described later, the storage unit 201 stores a cancellation waiting list, a cancel desired list, a swap desired list, and the like as necessary.

The control unit 202 of the server 2 executes processing according to the program stored in the storage unit 201 based on a request or the like transmitted from the user terminal 3. For example, the control unit 202 executes processing such as retrieval, new registration, deletion, and update of data with respect to the database DB stored in the storage unit 201, and performs communication with the user terminal 3 via the communication unit 203 and the network NW.

### [Configuration of Terminal Device]

The user terminal 3 is, for example, a tablet type terminal or a smart phone, and is composed of a touch panel, a calculation unit such as a CPU, a storage device such as a RAM or a ROM, a display device such as an LCD, a speaker for outputting sound, a microphone for collecting sound, and the like.

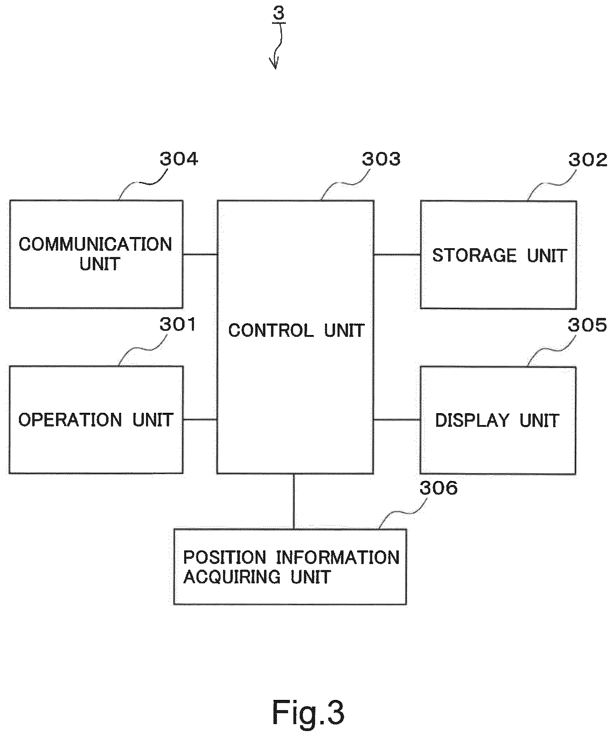

As shown in FIG. 3, the user terminal 3 includes at least an operation unit 301, a storage unit 302, a control unit 303, a communication unit 304, a display unit 305, and a position information acquiring unit 306.

The operation unit 301 receives an operation by the user U. The operation unit 301 includes a touch panel 301a and other buttons 301b which are arranged to overlap with the display unit 305. The storage unit 302 stores a program executed by the control unit 303, data used by the program, and the like. The storage unit 302 stores, for example, an operation system (OS), an application program for the electronic ticket system 1 (hereinafter, simply referred to as an electronic ticket application), data of a purchased electronic ticket used in the electronic ticket application, information of a user, and the like. In addition to the ticket ID, the data of the purchased electronic ticket may store, for example, information other than a person related to the user (e.g., the exhibition ID, name of the exhibition, the date and time, the venue, the ticket type, the seat number, the deletion key, the user ID of the purchaser, the status, the ticket image, and the like) among various types of information linked to the ticket ID in the database DB of the storage unit 201 of the server 2.

The electronic ticket application may be dedicated application software for using the electronic ticket system 1, or may be a browser or a messenger application. When a browser or a messenger application is used as an electronic ticket application, the user terminal 3 may access the server 2 using the electronic ticket application, and may acquire and display data relating to purchased electronic tickets and the like from the database DB of the server 2 at any time. In the case of adopting such a configuration, the user terminal 3 may store only the minimum necessary information (e.g., account information for using the electronic ticket system 1, etc.) in the storage unit 302, and may appropriately acquire information on purchased electronic tickets, etc. from the server 2, for example.

The control unit 303 executes various programs such as an electronic ticket application stored in the storage unit 302. In the electronic ticket application, as will be described in detail later, various data stored in the storage unit 302 and processing based on the operation of the operation unit 301 are performed.

The communication unit 304 communicates with the server 2 via the network NW. In addition, the communication unit 304 may be configured to be capable of short-range wireless communication (NFC), infrared communication, visible light communication, or the like.

The display unit 305 is a display element such as a liquid crystal display, and displays various types of information (ticket faces of electronic tickets) under the control of the control unit 303. The display unit 305 realizes various input interfaces in cooperation with the touch panel 301a.

The position information acquiring unit 306 acquires the current position of the user terminal 3. For example, a GPS (Global Positioning System) receiver may be used as the position-information acquiring unit 306. The position information acquiring unit 306 may acquire the position information by any method other than GPS. For example, the position information may be acquired based on the position information or the radio wave intensity of the base station of the wireless communication, or the position information may be distributed from a transmitter such as a beacon, and may be received by the user terminal 3 in the vicinity of the transmitter to acquire the position information.

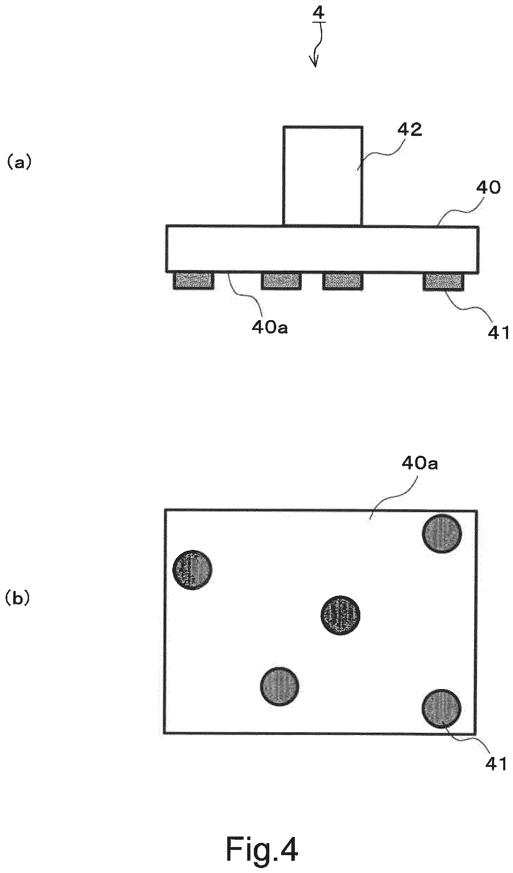

FIG. 4(a) is a side view of the stamp 4, and FIG. 4(b) is a bottom view of the stamp 4. The stamp 4 functions as a deletion means used in the electronic ticket system 1 for deleting the electronic ticket stored in the user terminal 3. The stamp 4 has a plurality of contact members 41 arranged on a bottom surface 40a of the main body 40 for contacting the touch panel and the like, and a handle 42 for gripping the main body 40 is provided on an upper portion of the main body 40. When contact of a conductive material is required to detect a position on the touch panel, it is desirable to use a conductive member for the contact member 41 and a nonconductive member for the main body 40 to prevent a detection error. When the contact member 41 of the stamp 4 is pressed, the electronic ticket application of the user terminal 3 detects the arrangement pattern, and specifies a deletion key corresponding to the arrangement pattern. As shown in FIG. 4B, the present embodiment includes five contact members 41, but a large number of mutually different arrangement patterns can be realized by the number and arrangement of the contact members 41, and a unique deletion key is assigned to each arrangement pattern.

As a deletion means for deleting the electronic ticket stored in the user terminal 3, a configuration other than the stamp 4 may be adopted. For example, any configuration may be employed as long as the deletion key associated with the electronic ticket and/or the deletion key possessed by the deletion means can be exchanged and matched by short-range wireless communication, infrared communication, visible light communication, QR code (registered trademark), bar code reading, or the like. However, the above-mentioned configuration using the stamp is excellent in that the configuration of the deletion means is simple, the power source and the communication means are not required for the deletion means, and the operation is simple.

### [Basic Operation of the Electronic Ticket System]

A basic flow of a user purchasing and using an electronic ticket by using the electronic ticket system 1 configured as described above will be described.

### [Purchase of electronic tickets]

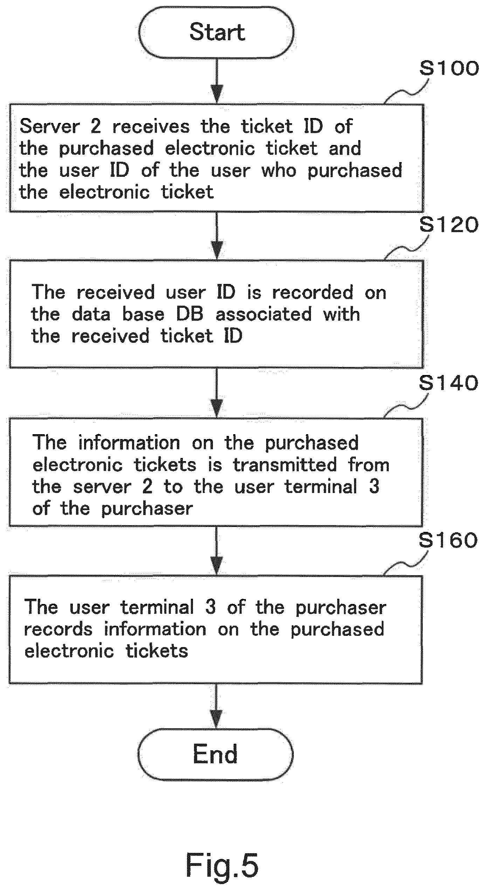

The user purchases a ticket of a desired event from a ticket seller (e.g., a ticket store, a ticket selling terminal, a ticket site provided on the Internet, etc.) . At this time, the user selects various conditions such as an event, a seat type, the number of seats, and a ticket receiving method, and performs a settlement procedure. When an electronic ticket is selected as the ticket receiving method, the electronic ticket system of the present invention is used. Hereinafter, a flow of a subsequent stage in the case where an electronic ticket is selected as a receiving method will be described. FIG. 5 is a flowchart showing a processing procedure of the electronic ticket system 1 at the time of purchasing an electronic ticket. When the settlement of the ticket price is completed, the ticket seller transmits the ticket ID of the purchased electronic ticket and the user ID of the user who purchased the electronic ticket to the server 2, and the server 2 receives the ticket ID (step S100). Then, the server 2 records the user ID received from the seller as the user ID of the purchaser associated with the ticket ID received from the seller in step S120. In step S140, the server 2 transmits the purchased electronic tickets to the user terminal 3 of the purchaser. The transmission destination and transmission method at this time may be a mail address, an SNS account, or the like linked to the user ID of the purchaser. Further, the information of the electronic ticket to be transmitted may be data such as a ticket ID, an exhibition ID, a name of the exhibition, a date and time, a venue, a ticket type, a seat number, an deletion key, and a face image corresponding to the purchased electronic ticket, or may be information (e.g., URL (Uniform Resource Locator)) for specifying a location on the Internet for acquiring these data. Note that the data transmitted to the user terminal at the time of purchase is not necessarily sufficient by the ticket ID, the exhibition ID, the name of the exhibition, the date and time, the ticket type, the ticket image, the seat, and the deletion key. Some (or all) of the data may not be transmitted at the time of purchase, or other data may be transmitted at the time of purchase. For example, when the browser or the messenger application is used as the electronic ticket application, the user terminal 3 may not receive the information of the electronic ticket at the time of purchase, but may acquire the information of the electronic ticket from the server 2 as necessary, for example, when the electronic ticket is used. The user terminal 3 of the purchaser receives information on electronic tickets from the server 2 through the network NW and the communication unit 304 and records the information in the storage unit 302 (step S160). Based on the information of the received electronic ticket, the electronic ticket application executed by the user terminal 3 can display the face of the electronic ticket on the display unit 305. Thus, the processing at the time of purchase is completed.

### [Using Electronic Tickets]

The purchaser of the electronic ticket receives the information of the electronic ticket transmitted from the server 2 at his/her user terminal 3, and causes the electronic ticket application to execute processing based on the information.

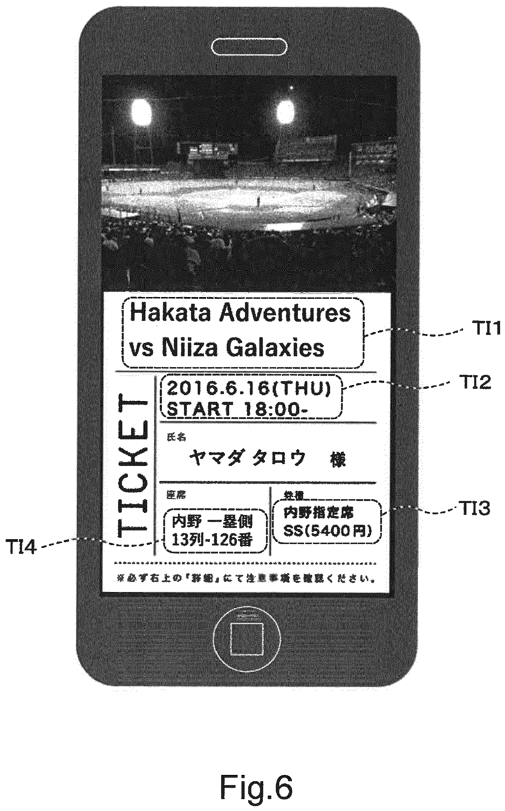

When the user starts the electronic ticket application by operating the operation unit 301 of the user terminal 3, the control unit 303 selectively displays the received electronic ticket on the display unit 305. When the user operates the operation unit 301 to select a desired electronic ticket, the control unit 303 displays the ticket face of the selected electronic ticket on the display unit 305 based on the information of the selected electronic ticket. For example, as shown in FIG. 6, the control unit 303 may display, on the display unit 305, information such as an exhibition name (TI1), a date and time (TI2), a ticket type (TI3), and a seat number (TI4), superimposed on the image of the ticket face.

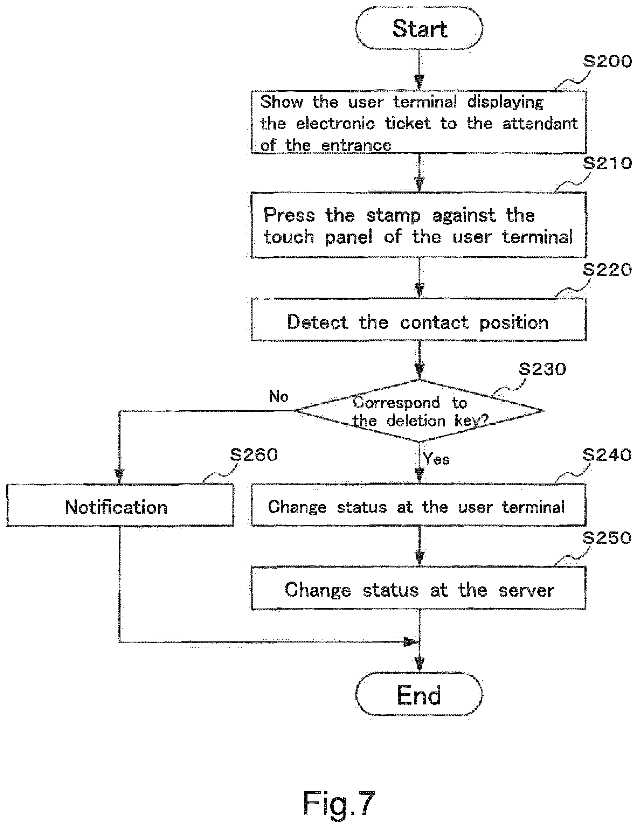

FIG. 7 is a flowchart showing a processing procedure of the electronic ticket system 1 when the electronic ticket is used. The user makes the display unit 305 of the user terminal 3 display the face of the electronic ticket by the above-described operations at the entrance of the event on the day of the event, and shows the ticket to the attendant of the entrance in step S200. While visually confirming that the face of the electronic ticket of the event is that of the event, the attendant presses the stamp 4 against the touch panel 301a of the user terminal 3 to perform "deletion", which make the electronic ticket into used (step S210). At this time, the stamp 4 may be pressed in a state in which the ticket face is displayed on the display unit 305, or the stamp 4 may be pressed after the screen for deletion is displayed. In step S220, the touch panel 301a of the user terminal 3 detects the contact position of the stamp 4 by the contact member 41. Then, the control unit 303 of the user terminal 3 specifies the deletion key corresponding to the touch position detected by the touch panel 301a and checks whether the specified deletion key corresponds to the deletion key of the electronic ticket whose ticket face is displayed in step S230. If they correspond (step S230; YES), characters and images indicating that they have been used (hereinafter referred to as "cancellation stamp information") are displayed superimposed on the ticket face, and the status is set to "Used" (step S240) . When the electronic ticket corresponds to the deletion key, the user terminal 3 notifies the server 2 of the fact that the electronic ticket has been used at an appropriate time (immediately after the checking or after a short time has elapsed), and the server 2 sets the status of the electronic ticket to "Used" (step S250), and ends the process. On the other hand, when the key does not correspond to the deletion key (step S230; No), information (for example, characters or images) indicating the fact is displayed on the display unit 305, a buzzer sound is sounded for a predetermined period, a flash is emitted, or the like, so that the user and/or the attendant can recognize that the electronic ticket is not an appropriate electronic ticket for passing through the entrance (step S260), and the process is terminated.

In the above example, when deletion is performed, the user terminal 3 checks the deletion key. However, the contact position detected by the touch panel 301a of the user terminal 3 may be transmitted to the server 2, the deletion key may be checked to the server 2, and the verification result may be transmitted from the server 2 to the user terminal 3. In the case where the user terminal 3 verifies the deletion key, the deletion can be performed without being affected by the communication environment with the server 2 or the like at the time of the deletion, but the demand for the processing capacity and the storage capacity of the user terminal 3 becomes high. On the other hand, in the case where the server 2 performs the checking of the deletion key, there is an advantage that the request of the processing capability or the like of the user terminal 3 is low, and by proceeding to the checking with the server 2, it is possible to confirm whether or not the same ticket is duplicated in a plurality of terminals, but there is a case where the communication environment or the like with the server 2 is affected at the time of the deletion.

The electronic ticket system 1 of the present invention realizes a highly convenient electronic ticket system and program by adding changes and modifications described below to the basic flow described above.

### [Change face image according to situation]

When the program for the electronic ticket system is activated in the user terminal 3 of the user who purchased the electronic ticket and the purchased electronic ticket is selected, the face of the electronic ticket is displayed on the display unit 305 as described above. In the electronic ticket system 1 of the present embodiment, the ticket face to be displayed on the user terminal 3 can be changed according to various situations.

Various timings for changing the ticket face are conceivable. For example, the user terminal 3 may change the ticket face at a predetermined time. In this case, the user terminal 3 may store a schedule for changing the ticket face and information corresponding to the content of the change in the storage unit 302. When the user terminal 3 can acquire the position information, the ticket face may be changed in accordance with the position information. In addition, the ticket face may be changed when a predetermined signal is received from a beacon which constantly transmits a radio signal, a transmitter such as a short-range radio communication, a visible light communication, an infrared communication, or the like. If the predetermined signal is transmitted only within a relatively narrow region, even in a case where the user terminal 3 does not have means for acquiring the position information or in a case where the position information cannot be acquired, it is possible to cause a change in the ticket face limited to a range in which the signal from the transmitter can be received. In addition, the ticket face may be changed at the time of so-called deletion in which the electronic ticket has been made into used. Further, when an instruction to change the ticket face (and the content of the change if necessary) is received from the outside of the server 2 or the like, the ticket face may be changed. In this case, the server 2 may store a schedule for changing the ticket face for each electronic ticket in association with each other in advance, and may transmit an instruction to change the ticket face according to the schedule, or may transmit an instruction to change the ticket face collectively for a plurality of electronic tickets (e.g., electronic tickets having a common exhibition or seat type) . The above-described method of defining the timing of changing the ticket face is an example, and it is preferable to define the timing of changing the ticket face by singly or arbitrarily combining the above-described method and other methods.

The data relating to the changed ticket face may be stored in advance in the storage unit 302 of the user terminal 3. In this case, the ticket face can be changed without being affected by the communication environment or the like at the timing of changing the ticket face, but a storage capacity for storing data on the ticket face before and after the change is required. Alternatively, the user terminal 3 may acquire data relating to the changed ticket face at the timing of changing the ticket face. In this case, since it is unnecessary to previously store the data relating to the changed ticket face, there are advantages that the storage capacity can be saved, and that the ticket face can be changed in accordance with the occurrence of various triggers and the latest information, but there are cases where the ticket face cannot be smoothly changed due to the influence of the communication environment at the timing of changing the ticket face. As a method of transmitting the data of the changed ticket face to the user terminal 3, the data may be delivered from a transmitter such as a beacon, a short-range wireless communication, a visible light communication, an infrared communication, or the like via the network 5.

Hereinafter, an example of changing the ticket face in various situations will be described.

### [Change of image of ticket after purchase of electronic ticket and before admission]

In the electronic ticket system 1, it is preferable to change the face of the electronic ticket after purchasing the electronic ticket until the entry. For example, the countdown until the start of the event may be displayed on the ticket face (display of the ticket face image itself, or display of superimposing information such as characters and graphics on the ticket face image may be referred to as "display on the ticket face" hereinafter), or displayed on the ticket face while updating information on the event. By doing so, it is possible to raise the expectation of the event participant for the event. Further, after the opening time is approached, the admission acceptance status (e.g., length of the admission queue, number of waiting persons, etc.) may be displayed on the ticket face.

### [Change of face image immediately before entry]

In the electronic ticket system 1, the face of the electronic ticket may be changed immediately before the entry. For example, the ticket face may be changed immediately before the entry or at the timing of checking the deletion key of the electronic ticket.

Immediately before entry may be determined using the time of day and/or the location information of the user terminal 3. For example, when the current position of the user terminal is within a predetermined range from the venue or is located in the entrance waiting area between the predetermined time before the date and time and before the entrance reception deadline, it may be determined that the current position is immediately before the entry. In addition, when it is estimated that the user terminal 3 is moving toward the venue due to a change in the location information of the user terminal 3 over time, it may be determined that it is just before admission.

In the case where the ticket face image is changed immediately before the entry, in the case where the same performances are repeated a plurality of times (for example, in the case where a plurality of performances are performed on one day or in the case where the same card games are performed in a plurality of consecutive games), or the like, it is preferable to make the changed ticket faces different from each other each time. By doing so, it is possible to suppress improprieties caused by recording still images and moving images on the display screen of the ticket face and displaying these images in accordance with the timing of entry. It is preferable that the changed ticket face image is an image with motion such as animation or moving image. By doing so, it is possible to more reliably prevent fraud due to recording and reproduction of a still image. Further, since the images of the ticket faces are different each time, motivation for collecting the ticket faces is provided, and the number of repeaters can be increased.

In addition, in a configuration in which the image of the ticket face is changed immediately before the entry, it is preferable that the deletion of the electronic ticket is not accepted unless the changed ticket face image is displayed.

### [Change of the Ticket Face Image at the time of Deletion]

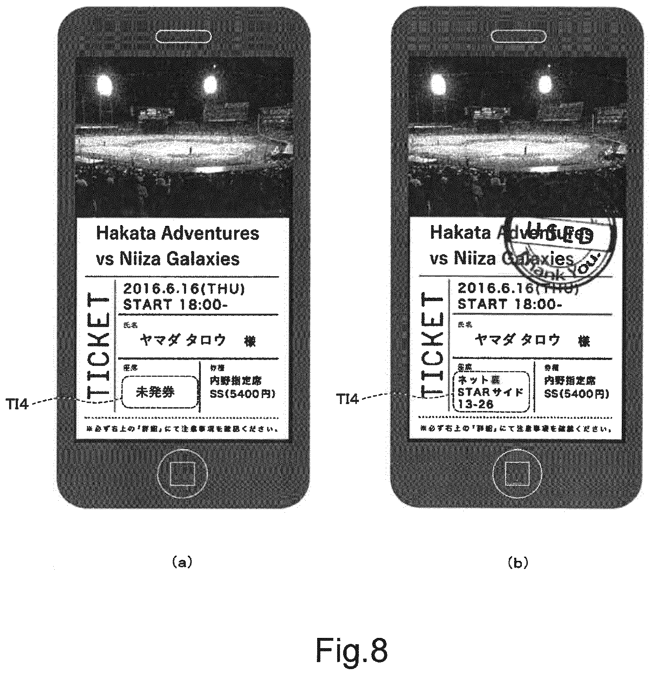

In the electronic ticket system 1, the face of the electronic ticket may be changed at the time of deletion. As an example of the content of the change, for example, the information of the seat is not displayed on the ticket face until the deletion is performed (for example, as indicated by the reference number TI4 in FIG. 8(a), it is preferable to display "Unissued ticket" or the like), and the information of the seat is displayed on the ticket face in response to the deletion (for example, at a time immediately after the checking of the deletion keys is completed) (for example, see the reference number TI4 in FIG. 8(b). Although there are cases in which a plurality of electronic tickets are purchased in order to acquire tickets of a better seat and unnecessary tickets are resaled, such resale can be suppressed by not displaying the seats until the time of disappearance. In the case of employing a configuration in which the information of the seat is not displayed on the ticket face until the time of deletion, the seat associated with the electronic ticket may be determined in advance and stored in the storage unit 302 of the user terminal 3 (and the storage unit 201 of the server 2). In this manner, communication for acquiring seat information at the time of deletion is unnecessary, and the ticket face can be changed without a time lag.

On the other hand, the seat associated with the electronic ticket may not be recorded in advance in the storage unit 302 of the user terminal 3. In the configuration in which the seat information is stored in advance in the storage unit 302 of the user terminal 3, it cannot be excluded that the information of the electronic ticket is analyzed by an illegal means to know the seat information in advance, but this can be excluded by a configuration in which the seat information is not recorded in advance in the storage unit 302 of the user terminal 3. The seat information may be stored in advance only in the storage unit 201 of the server 2, or may be determined by lottery at the time of the deletion. According to the configuration in which the lottery is performed at the time of deletion, it becomes impossible to know the seat assigned to the electronic ticket in advance by illegal access to the server 2. In addition, by assigning seats to those who actually enter, it becomes possible to assign seats such that the vacant seats are not conspicuous to the seats that the manager of the exhibition preferentially wants to enter (for example, the front seats, seats that are easy to be photographed by television relay, and the like).

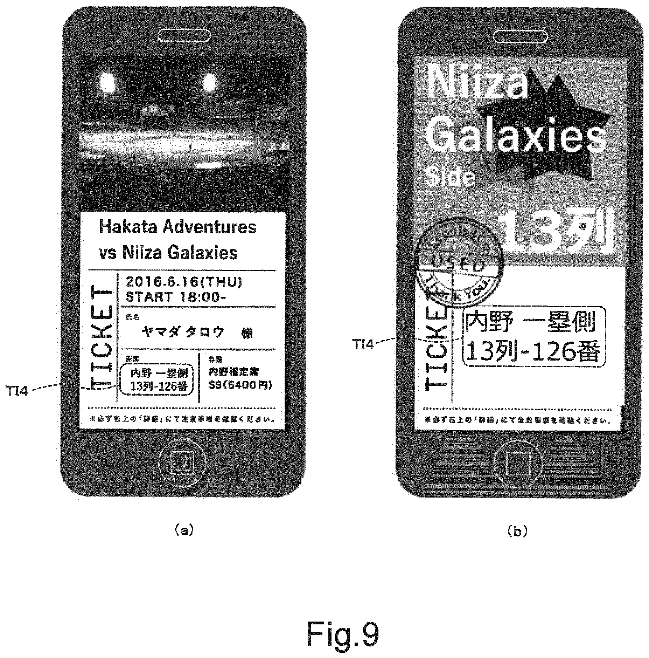

As another example of the content of the change, in the configuration in which the information of the seat is displayed on the ticket face before the deletion, the information of the seat may be displayed so as to be easily visible after the deletion (for example, see the reference number TI4 in FIG. 9(b) as compared with before the deletion (see the reference number TI4 in FIG. 9(a)). After passing through the entrance, the user has more opportunity to confirm the seat information assigned to him/her than the name of the event, the date and time of the event, etc., and therefore, it is effective to display the seat information so that the user can easily see the information after the deletion. As a concrete method of displaying the image so as to be easily visually recognizable, it is preferable to display the image larger than before the deletion, display it larger than other information, display it in a color easier to see (for example, a color with high saturation), display it blinking, move the display position (for example, scroll) or make the image of the ticket face different depending on the seat.

### [Change of image of ticket after entry]

In the electronic ticket system 1, the face of the electronic ticket may be changed after the electronic ticket has been deleted and the entry has been made. In this case, for example, information for promoting sales such as advertisements, coupons, and the like, and various guides may be displayed on the ticket face. In addition, the current position information may be acquired by the position information acquiring unit 306 of the user terminal 3, or the position information may be distributed from a transmitter such as a beacon or the like disposed at each place to the user terminal 3, and the current position information may be acquired by receiving the position information at the user terminal, and route guidance from the current position to the seat assigned to the electronic ticket may be displayed.

### [Change of Cancellation Stamp Information]

As described above, in the electronic ticket system 1, when the stamp 4 is pressed against the electronic ticket on which the ticket face is displayed on the user terminal 3, verification of the deletion key is performed, and in the case where the electronic ticket corresponds to the deletion key, the cancellation stamp information (for example, an image of a seal impression, a character, or the like) is superimposed on the ticket face and displayed. In the electronic ticket system 1, the design of the cancellation stamp information can be different for each exhibition.

The data of the cancellation stamp information may be stored in advance in the storage unit 302 of the user terminal 3. In this case, the cancellation stamp information can be displayed without being affected by the communication environment or the like at the time of the deletion. Alternatively, the user terminal 3 may acquire the data of the cancellation stamp information at the cancellation timing. In this case, since it is not necessary to store data of the cancellation stamp information in advance, the storage capacity can be saved, but the cancellation stamp information may not be displayed due to the influence of the communication environment or the like at the timing of changing the ticket face. The storage unit 302 of the user terminal 3 may store in advance a plurality of pieces of cancellation stamp information in association with the cancellation stamp ID, and the user terminal 3 may acquire the cancellation ID at the timing of the deletion.

In addition, the action (e.g., fade-in, slide-in, blinking, etc.) for displaying the cancellation stamp information at the timing of the deletion may be different for each exhibition. In this case, a plurality of actions may be stored in advance in the storage unit 302 of the user terminal 3 in association with the action ID. The cancellation stamp information to be displayed at the time of the deletion may be stored in the storage unit 302 in advance in association with the electronic ticket, or the action ID may be acquired by the user terminal 3 at the timing of the deletion.

As a method of transmitting the data of the cancellation stamp information, the cancellation stamp ID, or the action ID to the user terminal 3, the data may be transmitted via the network 5, or may be distributed from a transmitter such as a beacon, a short-distance wireless communication, a visible light communication, or an infrared communication in the vicinity of the entrance.

As a specific operation of making the design of the cancellation stamp information different for each exhibition, in the case where the same performances are repeated a plurality of times (for example, in the case where performances are performed a plurality of times per day, or in the case where matches of the same card are performed a plurality of times in a series of battles), the changed cancellation stamp information may be made different each time. In this manner, the change before and after the cancellation can be recorded as a moving image, and the illegality caused by displaying the moving image in accordance with the timing of entry can be suppressed. In order to make illegal copying of an image difficult, it is preferable that the cancellation stamp information is an image having motion, such as an animation or a moving image.

In addition, it is particularly preferable that both the ticket face image and the cancellation stamp information are different for each exhibition. This increases the number of combinations of both images, making fraud more difficult.

### [Functions for appropriate transfer of electronic tickets]

In the electronic ticket system 1, it is desirable to prevent the electronic ticket from being illegally transferred and allow the electronic ticket to be transferred to a friend, a family member, or the like so as not to impair convenience. Therefore, the electronic ticket system 1 may be provided with an unauthorized transfer prevention function and a transfer support function, which will be described below.

Here, the illegal transfer includes the transfer and resale of the electronic ticket on a route not desired by the operator (e.g., the manager of an exhibition) side of the electronic ticket system 1, as well as the double transfer, theft, and the like. Hereinafter, the unauthorized transfer suppressing function for suppressing such unauthorized transfer will be described. In addition, a method of utilizing the unauthorized transfer suppressing function as the transfer support function will also be described.

As an example of the unauthorized transfer suppressing function, the electronic ticket system 1 associates the electronic ticket received by the user terminal 3 with the information closely linked to the user terminal 3 itself or the user individual of the user terminal 3, stores the information in the server 2, and makes the electronic ticket usable only in the user terminal 3 whose information can be confirmed.

More specifically, in the electronic ticket system 1, when a user acquires an electronic ticket at the user terminal 3 and first displays the electronic ticket, information closely linked to the individual user (hereinafter, this information is referred to as "identification information") such as the individual identification number of the user terminal 3 and the login ID of the messenger application, and the ticket ID are linked and recorded in the server 2. If the identification information associated with the electronic ticket cannot be confirmed (for example, if it is not from the user terminal 3 having the individual identification number or if it is not an access from the messenger application logged in with the login ID associated with the electronic ticket), the electronic ticket may not be displayed. By doing so, it is possible to suppress the transfer of the electronic ticket to another person.

In order to facilitate the transfer of the electronic ticket to a third party, a transfer restriction release button may be prepared on the ticket face of the electronic ticket, and when the transfer restriction release button is touched, the association between the electronic ticket and information closely linked to the individual user may be released to allow the transfer of the electronic ticket. The user ID having the authority to release the transfer restriction may be specified (e.g., limited to the first purchaser), or the number of times of release of the transfer restriction may be limited (e.g., permitted only once). By imposing restrictions on the release of transfer restrictions, it is possible to deter the intermediation of illegal transfer and resale. As a procedure for transferring the electronic ticket, for example, information (e.g., URL) for receiving the electronic ticket is transmitted from the user terminal 3 of the transfer source to the user terminal 3 of the transfer destination. Then, when the electronic ticket is obtained at the user terminal 3 of the transfer destination according to the information for receiving the electronic ticket, the electronic ticket and the identification information of the transfer destination may be linked when the obtained electronic ticket is displayed first.

In addition, it is preferable that the identification information of the transfer destination can be specified in advance at the time of purchase, and the information for receiving the electronic ticket, for example, a URL or the like, is sent to the purchaser. The purchaser (transfer source) may send information (e.g., URL) for receiving the electronic ticket to the transfer destination by predetermined means (e.g., e-mail, messenger application, etc.), and the transfer destination may receive the electronic ticket in accordance with the information for receiving the electronic ticket. It is particularly advantageous to verify the identification information when the transferee receives the electronic ticket, and to allow the transferee to receive the electronic ticket only if the specified identification information is verified.

As another example of the unauthorized transfer suppressing function, the electronic ticket received by the user terminal 3 may be displayed so as to be known when another person is displaying the electronic ticket on another user terminal 3. For example, in a configuration in which a browser or a messenger application is used as an electronic ticket application and information on an electronic ticket such as an image of a ticket is appropriately acquired from the server 2, it is possible to specify the user terminal 3 from which information on an electronic ticket is to be acquired by the server 2, and therefore, when there is a request to acquire information on an electronic ticket from a plurality of user terminals 3, it is possible to display on each user terminal 3 that information on an electronic ticket has been acquired (or has been acquired) by other user terminals 3. This makes it easier to detect theft or double transfer of electronic tickets. For example, an access history to the information of the electronic ticket may be displayed. Further, information indicating the user who is currently accessing the information of the electronic ticket may be displayed.

As still another example of the unauthorized transfer suppressing function, the user may apply an arbitrary password to the electronic ticket received by the user terminal 3. The password may be set, for example, at the time of purchase, or when the electronic ticket is first received, and may be changed a posteriori. The set password is recorded in the server 2 (and, if necessary, the user terminal 3) in association with the ticket ID, and when the user terminal 3 attempts to display the face of the electronic ticket, the interface for inputting the password is displayed, and the face of the electronic ticket is displayed only when the correct password is input. By allowing an arbitrary password to be applied to the ticket, the electronic ticket can be easily made "one that can only be accessed by itself". The password may be a character string, or may be replaced by biometric authentication such as fingerprint authentication, voiceprint authentication, or face authentication.

The function of setting a password can also be used to transfer an electronic ticket to a third party. For example, a password is previously set to the electronic ticket at the transfer source, and information (e.g., URL) for receiving the electronic ticket is transmitted from the transfer source user terminal 3 to the transfer destination user terminal 3. In addition, a password is separately transmitted from the transfer source to the transfer destination. Then, when the electronic ticket is acquired by the user terminal 3 of the transfer destination in accordance with the information for receiving the electronic ticket, authentication is performed by the password. When a plurality of electronic tickets are purchased together and distributed to a plurality of third parties, it is preferable to provide an interface for selecting a plurality of electronic tickets in an electronic ticket application and collectively setting password to the selected electronic tickets, so that the plurality of electronic tickets can be efficiently set a password. In addition, it is also possible to apply a password in advance at the time of purchase of a ticket, either collectively or individually.

### [Other Assignment Support Functions]

When an electronic ticket is purchased or when a purchased electronic ticket is transferred to a third party, it is conceivable that a URL is sent to the user terminal 3 as information for receiving the electronic ticket, but the URL may be a so-called one-time URL whose accessible period is limited. When the ticket is purchased, the one-time URL may be automatically sent to the user terminal 3. When transferring an electronic ticket, a one-time URL may be sent to a prespecified destination in response to a request from a URL issuing authority (e.g., a user having a user ID linked to the electronic ticket, a transfer destination, or the like) registered in advance. In this manner, the electronic ticket can be received by accessing the one-time URL within a predetermined period of time, but after the predetermined period of time has elapsed, the electronic ticket cannot be received from the one-time URL, so that it becomes difficult to illegally acquire the electronic ticket.

As a method of confirming that a request for issuing a one-time URL is made by a person who has been registered in advance, identification information such as a user ID, a login ID of a messenger application, and a telephone number may be registered in advance, and the identification information may be compared with the identification information of the request source when the request is accepted. When checking by telephone number, a telephone number for acceptance of one-time URL issuance is provided, and when the telephone number for acceptance is called from the telephone of the telephone number registered by the URL issuer, the telephone number of the telephone of the originator is specified, and the one-time URL for accepting the electronic ticket corresponding to the telephone number is sent to the registered destination by the server 2.

An authorized person (e.g., a purchaser of an electronic ticket, a current owner, etc.) may be configured to change the destination (and a URL issuer) of the one-time URL, and when transferring an electronic ticket, the destination (and a URL issuer) of the one-time URL may be changed to the transferee. In this way, the transfer destination can issue the one-time URL and receive the electronic ticket. The authority to change the destination (and the URL issuing authority) of the one-time URL may not be granted to the transfer destination of the electronic ticket, may be granted only to a specific person such as the first purchaser, or the like. In addition, the number of times the destination is changed may be limited, for example, only one time may be allowed. By doing so, it is possible to suppress the intermediation of illegal acquisition and resale.

In addition, when the electronic ticket is transferred to a third party, the electronic ticket may be received by the transfer destination on condition that the settlement of the ticket price between the transfer destination and the transfer source is performed.

### [Simultaneous Multiple Entries]

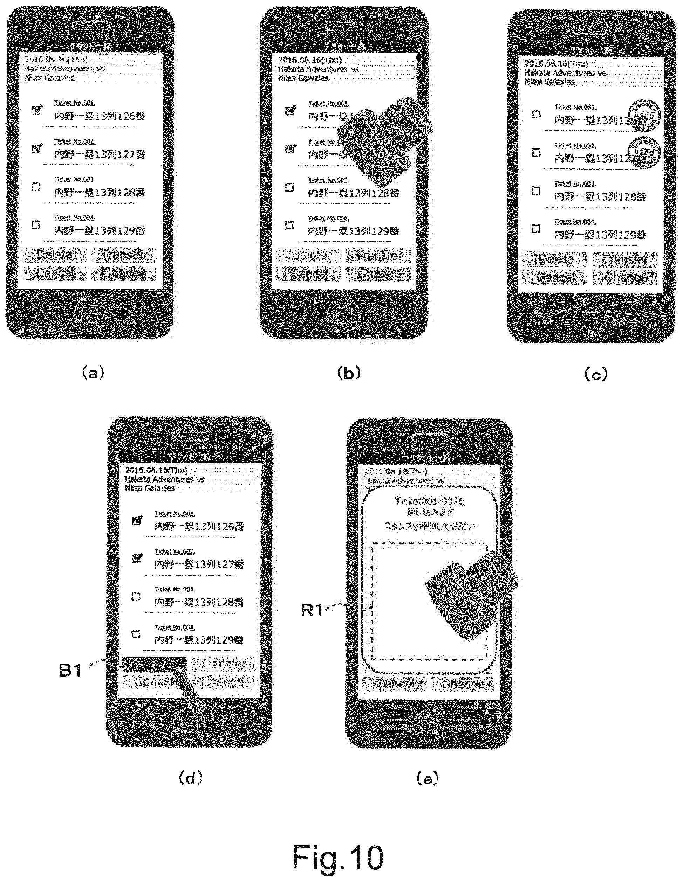

In the electronic ticket system 1, when a plurality of electronic tickets of the same exhibition are received by one user terminal 3, it is preferable to configure so that a plurality of people can simultaneously enter by only deleting the electronic tickets into the one user terminal 3. For example, when the electronic ticket application is activated and an electronic ticket is selected by the user terminal 3, when there are other electronic tickets linked to the same exhibition as the electronic tickets, the electronic tickets may be displayed so that the ticket to be deleted can be selected at the same time as shown in FIG. 10(a). Then, as shown in FIG. 10(b), in a state where a tickets to be deleted are selected, an deletion operation (for example, pressing the stamp 4 against the touch panel 301a) is performed to collectively delete the selected electronic ticket. That is, when the electronic tickets selected as subjects of the deletion are displayed on the display unit 305 of the user terminal 3, the cancellation stamp information is displayed in a superimposed manner (see FIG. 10(c)), and the fact that all the electronic tickets selected as the deletion target have been used is recorded in the storage unit 302 of the user terminal 3 (and, if necessary, the storage unit 201 of the server 2). In a state in which tickets to be deleted are selected at the same time, when the deletion button B1 displayed on the ticket face is pressed as shown in FIG. 10(d), the deletion area R1 in which the stamp 4 is to be pressed is displayed as shown in FIG. 10(e), and the stamp 4 is pressed against the deletion area R1, whereby deletion may be performed for the selected electronic ticket collectively.

When a plurality of people enter one user terminal 3, there may be a problem in checking a seat or the like because the one other than the person who has the one user terminal 3 (hereinafter, referred to as an accompaniment) does not have the electronic ticket (i.e., a ticket stub) after the deletion. Therefore, in the electronic ticket system 1, it is preferable that unique information (e.g., a ticket ID or a unique URL) for acquiring the accompaniment ticket stub can be transmitted from the user terminal 3 that has deleted a plurality of electronic tickets. More specifically, when the user selects an electronic ticket to which he/she wants to send the accompaniment ticket stub, the unique information becomes transmittable, and when an operation for transmission (for example, input of a transmission destination and touch of a transmission button) is performed, the unique information is transmitted, and the fact that the accompaniment ticket stub has been issued for the electronic ticket is recorded in the user terminal 3. Further, it is preferable that the user terminal 3 transmits to the server 2 that the accompaniment ticket stub has been issued, and the server 2 also records that the accompaniment ticket stub has been issued for the electronic ticket. To the accompaniment who has a portable terminal such as a smartphone, unique information for obtaining the accompaniment ticket stub is transmitted from the user terminal 3 to the accompaniment's portable terminal, and the accompaniment ticket stub is obtained from the server 2 using the accompaniment's portable terminal. As a result, an accompaniment ticket stub is displayed on the portable terminal of the accompaniment. In addition to information such as the name of the event, the date and time of the event, the seat number, and the ticket ID, the accompaniment ticket stub may include a moving image or animation in order to prevent improprieties.

In the server 2, when sending the accompaniment ticket stub to the portable terminal of the accompaniment, the information unique to the accompaniment ticket stub and the accompaniment ticket stub is linked. Then, when a third party who does not coincide with the unique information of the accompanied party attempts to further acquire the accompaniment ticket stub, the third party refuses to acquire the accompaniment ticket stub. By doing so, fraud can be suppressed. It is preferable that the unique information of the accompaniment is information that is difficult to pass to another person, such as a terminal ID, a telephone number, and an ID of the SNS of the portable terminal of the accompaniment, for example.

For an accompaniment who does not have a portable terminal such as a smartphone, a ticket stub issuing device that prints an accompaniment ticket stub in response to communication with the user terminal 3 may be disposed immediately after the entrance. The user terminal 3 may be operated to select an electronic ticket for issuing a ticket stub by the ticket stub issuing device and communicate with the ticket stub issuing device in this state, thereby issuing a ticket stub. Even when an accompaniment ticket stub is issued from the ticket stub issuing device, it is preferable that the fact that the accompaniment ticket stub has been issued for the electronic ticket is recorded in the user terminal 3. Further, it is preferable that the user terminal 3 or the ticket stub issuing device transmits to the server 2 that the accompaniment ticket stub has been issued, and the server 2 also records that the accompaniment ticket stub has been issued for the electronic ticket.

The number of accompaniment ticket stubs that can be issued by the user terminal 3 that deletes multiple electronic tickets should be one less than the number of deleted electronic tickets. That is, the electronic ticket corresponding to the owner of the user terminal 3 may be left in the user terminal 3. Alternatively, for all the electronic tickets that have been deleted, including the owner of the user terminal 3, accompaniment ticket stubs may be made issuable. By doing so, it is possible to issue an accompaniment ticket stub even for the owner of the user terminal 3 when the remaining battery capacity of the user terminal 3 is insufficient. In order to prevent improprieties, in the case where accompaniment ticket stubs have been issued for all of the deleted electronic tickets, the user terminal 3 may not display the deleted electronic tickets (or it may be visually confirmed that the accompaniment ticket stubs have been issued).

### [Ticket Inspection in the Venue]

At the venues for exhibition such as events, the venues are divided into a plurality of areas according to the type of seats and the like, and a ticket inspection is performed to confirm whether or not the venues are qualified to enter the areas (that is, whether or not they have an appropriate ticket) at the entrances of the respective areas. In the electronic ticket system 1, the following functions may be provided to facilitate checking.

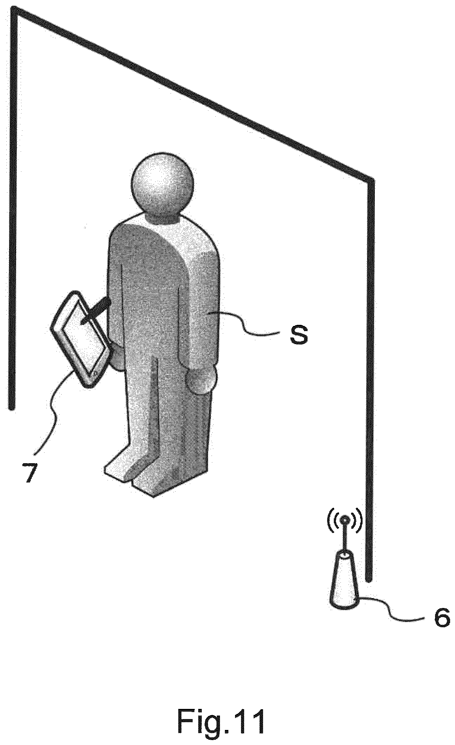

In the configuration for facilitating the checking of the electronic ticket system 1, as shown in FIG. 11, a transmitter 6 such as a beacon and a checking terminal 7 of an attendant S performing the checking are arranged at the checking location. The ticket inspection terminal 7 is a terminal including a control unit, a display unit, a communication unit, a storage unit, an input unit, and the like, and may be, for example, a portable terminal similar to the user terminal 3, a tablet-type computer, and the like. When the user terminal 3 enters the range in which the signal from the transmitter 6 can be received, the user terminal 3 automatically transmits information for ticket inspection to the ticket inspection terminal 7 by the electronic ticket application in response to the signal transmitted from the transmitter 6. The information for ticket inspection may include, for example, information indicating whether or not the user is qualified to enter the area, such as the type of electronic ticket deleted in the user terminal 3, the type of seat, the seat number, and the like, and information capable of identifying the user, such as a facial photograph of the owner of the user terminal 3.

Upon receiving the information for ticket inspection from the user terminal 3, the ticket inspection terminal 7 may determine whether or not the user is qualified to enter the area based on the information indicating whether or not the user is qualified included in the information for ticket inspection, and when the user is not qualified, may alert by displaying that the user is not qualified, sounding a buzzer, flashing, or the like. In addition, it is preferable to display the identification confirmable information included in the information for ticket inspection on the display unit of the checking terminal 7 so that the attendant S can confirm that the user of the user terminal 3 himself/herself is trying to pass through the checking location. With such a configuration, the owner of the user terminal 3 can be checked even in a state in which the hands are full. In addition, double checking including ticket type checking and identity confirmation can be performed by the determination at the ticket inspection terminal and the determination by visual inspection by the attendant S, thereby facilitating the prevention of improprieties.

### [Temporary Exit and Re-entry]

In the venues of exhibitions such as events, after passing through the entrance, they may be allowed to exit temporarily and then re-enter. In the electronic ticket system 1, the following functions may be provided in order to properly manage re-entry.

In the configuration for facilitating the checking of the electronic ticket system 1, in addition to the deletion key, the temporary exit key and the re-entry key are stored in the storage unit 201 and/or the storage unit 302 of the server 2 in association with the electronic ticket. The deletion key, the temporary exit key, and the re-entry key may all be different, or some or all may be common. If they are common, it is not necessary to store the information of the key individually, and the same information may be shared or diverted. In addition, "Temporary Exit" is provided as a status associated with the electronic ticket. At the temporary exit gate, the attendant has the stamp 4 of the arrangement of the contact member 41 corresponding to the temporary exit key. At the re-entrance gate, the attendant has the stamp 4 of the arrangement of the contact member 41 corresponding to the re-entrance key.

A user who intends to temporarily exit presents the user terminal 3 on which the electronic ticket (unlike the entry time, the cancellation stamp information is displayed) is displayed by the electronic ticket application to an attendant of the temporary exit gate, and receives an operation of pressing the stamp 4 against the touch panel 301a of the user terminal 3. In response to this operation, whether or not the electronic ticket corresponds to the temporary exit key of the arrangement pattern electronic ticket of the contact member 41 is checked by the same method as that of checking the deletion key at the time of entry. In the case of a corresponding one, the display unit 305 of the user terminal 3 indicates that a temporary exit is possible, and the status is set to "Temporary Exit." On the other hand, when the electronic ticket does not correspond to the temporary exit key, the user and/or the attendant can recognize that the electronic ticket is not an appropriate electronic ticket by displaying the fact on the display unit 305, sounding a buzzer, emitting a flash, or the like.

When a user who is temporarily exiting re-enters, the user presents the user terminal 3 on which the electronic ticket is displayed by the electronic ticket application to an attendant of the re-entrance gate, and receives an operation of pushing the stamp 4 against the touch panel 301a of the user terminal 3. In response to this operation, it is checked whether or not the electronic ticket corresponds to the re-entry key of the arrangement pattern electronic ticket of the contact member 41 by the same method as that of checking the deletion key at the time of entry, and it is confirmed that the status before pressing the stamp 4 is "Temporary Exit". When the arrangement pattern corresponds to the re-entry key and the status is "Temporary Exit", a message indicating that re-entry is possible is displayed on the display unit 305 of the user terminal 3, and the status is set to "Used". On the other hand, when the re-entry key is not supported or the status is not "Temporary Exit", the user and/or the attendant can recognize that the electronic ticket is not an appropriate electronic ticket by displaying on the display unit 305 that the re-entry is impossible, sounding a buzzer sound, emitting a flash, or the like.

With the above-described configuration, only those who have temporarily exited can re-enter the entrance, and unauthorized entry from the re-entrance gate can be prevented. In the same manner as in the case of the ticket inspection in the venue, in response to a signal sent from a transmitter such as a beacon, the user terminal 3 may send information such as a facial photograph to the terminal for an attendant at the re-entrance gate, and display the information on the terminal for an attendant so that the attendant can confirm that the user of the user terminal 3 himself/herself is going to pass through the re-entrance gate.

### [Change/Upgrade of ticket type]

In a venue for an exhibition such as an event, some types of seats may be full, while other types of seats may be empty. In the electronic ticket system 1, the following functions may be provided in order to enable the type of the seat to be changed after the purchase.

In the configuration enabling the change of the ticket type, it is preferable that the user terminal 3 can make an inquiry about the ticket type that can be changed to the server 2. In addition, when an application for an electronic ticket system is started, a guide of the type of ticket that can be changed may be sent from the server 2 to the user terminal 3 at an appropriate time (e.g., before the date and time of the holding of the electronic ticket, immediately before the entry, when the electronic ticket is deleted, etc.) and the user terminal 3 may display the received guide in the display unit 305. Since the electronic ticket in which the user ID of the purchaser is not recorded means that the electronic ticket remains unsold, the server 2 may search for the unsold electronic ticket and transmit the type of the electronic ticket extracted as the search result as the inquiry result or the guide.

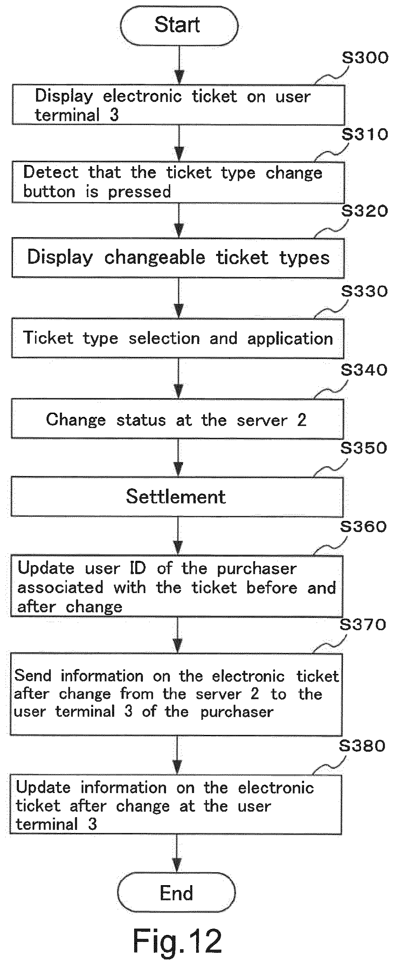

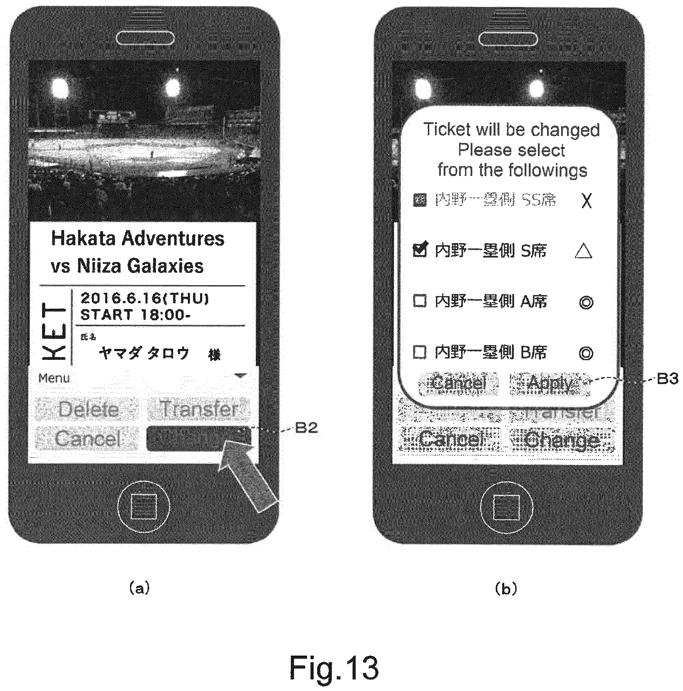

FIG. 12 is a flowchart showing a processing procedure of the electronic ticket system 1 when the ticket type is changed. If the user wishes to change the ticket type, the user terminal 3 selects and displays the electronic ticket before the change by using the electronic ticket application in step S300. When there is a ticket type that can be changed, the user terminal 3 displays the ticket type change button B2 together with the ticket face of the electronic ticket, as shown in FIG. 13(a). The ticket type change button B2 may be constantly displayed together with the ticket face, or may be displayed only when a predetermined operation is performed. When it is detected that the ticket type change button B2 is pressed (step S310), the user terminal 3 displays changeable ticket types in a selectable manner together with the application button B3 (step S320), as shown in FIG. 13(b). Note that not only the type of ticket but also a seat may be specified and selectable. In addition, the number of remaining seats may be displayed according to the type of ticket. When the user selects the type of ticket desired to be changed and presses the application button B3 (step S330), a request for changing the type of ticket is transmitted from the user terminal 3 to the server 2 (step S340). When the server 2 receives the ticket type change request, the server 2 performs a settlement procedure for the fee related to the ticket type change with the user terminal 3 in step S350. When the settlement procedure is completed, the server 2 transcribes the user ID of the purchaser associated with the electronic ticket before the change to the user ID of the purchaser of the electronic ticket after the change, and deletes the user ID of the purchaser associated with the electronic ticket before the change in step S360. In addition, the server 2 transmits the information of the electronic ticket after the change (the ticket ID, the exhibition ID, the exhibition name, the date and time, the ticket type, the seat number, the deletion key, the ticket face image, and the like) to the user terminal 3 (step S370). In step S380, the user terminal 3 replaces the information of the electronic ticket before the change with the information of the electronic ticket after the change received from the server 2. The status of the electronic ticket may take over the status before the change. In other words, when the type of ticket is changed after the deletion, it is preferable to take over the status of "Used" (or "Temporary Exit" when the ticket is temporarily exiting) as the status. In the above example, the type change button B2 may be displayed on a list screen on which a plurality of purchased electronic tickets can be selected, and when the type change button B2 is pressed in a state in which a number of electronic tickets are selected on the list screen, the change of the ticket type may be requested collectively for the selected electronic ticket. In this case, it is particularly preferable that only a certain ticket type can be selected and displayed together with the application button B3 in the remaining seats equal to or larger than the number of the selected electronic tickets.

According to the above procedure, the change of the ticket type in the electronic ticket system 1 is completed. Note that the method of changing the ticket type may be limited to a change from a seat of a low grade to a seat of a high grade. In this way, by limiting the method of change and allowing the change, an effect can be obtained in which a good seat can be easily filled and a vacant seat can be seen to be small. In addition, the change of the ticket type may be made only before or after the electronic ticket before the change is deleted, or both may be made possible, but if the change is made only after the deletion, it is motivated to enter early, and in the exhibition where the attendances tend to concentrate just before the opening time, the entry timing can be leveled.

### [Cancellation Waiting and Cancellation]

The electronic ticket system 1 may provide a function of matching a request to cancellation waiting of an electronic ticket with a request to cancel a purchased electronic ticket. Hereinafter, a specific configuration example for providing such a function will be described.

In the electronic ticket system 1 providing the above functions, the server 2 is configured to store a cancellation waiting list and a cancellation request list in the storage unit 201. The cancellation waiting list stores the ticket type (the exhibition ID and the type of the seat), the user ID of the user who desires to wait for cancellation (hereinafter, this user is referred to as the purchase requester), and the date and time when the cancellation waiting request is received in association with each other. The cancellation request list stores the ticket ID (including the exhibition ID and the type of the seat), the user ID of the user who desires to cancel the electronic ticket (hereinafter, this user is referred to as a cancellation requester), and the date and time when the cancellation request is received in association with each other.

### [Waiting for Cancellation]

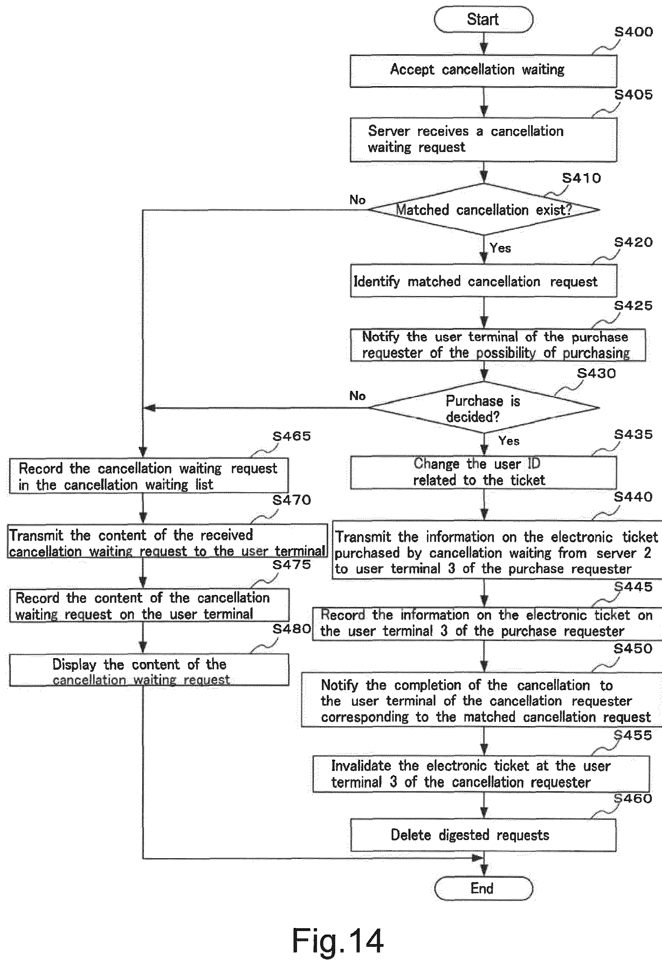

FIG. 14 is a flowchart showing a processing procedure of the electronic ticket system 1 when a cancellation waiting is accepted. In the sales counter such as a ticket sales store, a ticket sales terminal, and a ticket site provided on the Internet, a cancellation waiting for a sold out ticket type is accepted (S400 in steps) with respect to an exhibition permitting a cancellation waiting by this system. When accepting the cancellation waiting, at least the event ID, the ticket type, and the user ID of the user who desires to wait for cancellation (hereinafter, this user is referred to as a purchase requester) are acquired, and are transmitted to the server 2 as a cancellation waiting request. In addition to the request from the sales counter, the cancellation waiting request may be directly sent from the user terminal 3 of the purchase requester to the server 2. When the server receives a cancellation waiting request (step S405), the server 2 queries the cancellation request list (step S410) to see if there are cancellation requests that match the conditions in the received cancellation waiting request.

If there is a cancellation request that matches the condition (step S410; yes), server 2 identifies it as a matched cancellation request (step S420). When there are a plurality of cancellation requests whose conditions match, a cancellation request having a higher priority may be used as a matched cancellation request by giving priority to a cancellation request having an earlier date and time of reception of the cancellation request. Then, the server 2 notifies the user terminal 3 of the purchase requester that it can be purchased (step S425) and confirms the purchase intention of the purchase requester (step S430). The steps for confirming the purchase intention of the purchase requester (steps S425 and S430) may be omitted. At the user terminal 3 of the purchase requester, a display and operational interface for the purchase decision (and, if necessary, fee settlement) is provided upon receipt of a notice that the purchase can be made from the server 2 by an electronic ticket application. If the purchase is not decided by the purchase requester (step S430; No), the process proceeds to step S465. On the other hand, when the purchase decision (and fee settlement) is performed by the purchase requester (step S430; yes), it is transmitted to Server 2. When the server 2 confirms the purchase decision (and rate settlement), it changes the user ID of the electronic ticket corresponding to the matched cancellation request from the user ID of the cancellation requester to the user ID of the purchase requester (step S435). In addition, the server 2 transmits the information of the electronic ticket (ticket ID, exhibition ID, exhibition name, date and time, ticket, seat number, deletion key, face image, etc.) similar to the information transmitted when the electronic ticket is purchased in the normal manner together with the notification of the completion of the purchase to the user terminal 3 of the purchase requester (step S440). The user terminal 3 of the purchase requester which has received the information records the information of the purchased electronic tickets as status of which is "Unused" in the storage unit 302 (step S445). In step S450, the server 2 sends a notice of cancel completion to the user terminal 3 of the cancellation requester corresponding to the matched cancellation request. The user terminal 3 of the cancellation requester sets the status of the electronic tickets to "Canceled" (S455). In the electronic ticket application, for example, the electronic ticket whose status is "Canceled" is not displayed thereafter, so that cancellation of the cancellation request is not possible. The server 2 deletes the cancellation waiting request and the cancellation request, which have been digested by resale, from the cancellation waiting (step 460)and the cancel desire list, and ends the processing. Whether to refund the price of the electronic ticket originally purchased, and whether to collect a fee from the cancellation requester and/or the purchase requester, are optional.

When there is no cancellation request that matches the condition (step S410; No), the server 2 records the received cancellation waiting request in the cancellation waiting list in association with the event ID, the ticket type, the user ID of the purchase requester, and the date and time when the cancellation waiting request was received (step S465). The server 2 transmits to the user terminal 3 of the purchase requester the fact that the received cancellation waiting request has been registered in the cancellation waiting list and the content of the received cancellation waiting request (step S470).

The user terminal 3 of the purchase requester has a function of displaying a cancellation waiting application completed list by the electronic ticket application. When the user terminal 3 of the purchase requester receives the fact that the received information has been registered in the cancellation waiting list from the server 2, etc., the received information is stored in the storage unit 302 (step S475), and the information is displayed in the display unit 305 to confirm the content of the applied cancellation waiting request (step S480), and the processing ends. The user terminal 3 of the purchase requester may display an interface for canceling the cancellation waiting request together with the content of the cancellation waiting request. When the operation of canceling the cancellation waiting request is performed on the interface, the user terminal 3 requests the server 2 to cancel the cancellation waiting request, and the server 2 deletes the cancellation waiting request from the cancellation waiting list on condition that the cancellation request has not yet been assigned to the cancellation waiting request. When the server 2 completes the deletion of the request waiting for cancellation, the server 2 notifies the user terminal 3 of the purchase requester to that effect, and the user terminal 3 does not display the canceled cancellation waiting request when the notification is received.

### [Cancellation Acceptance]

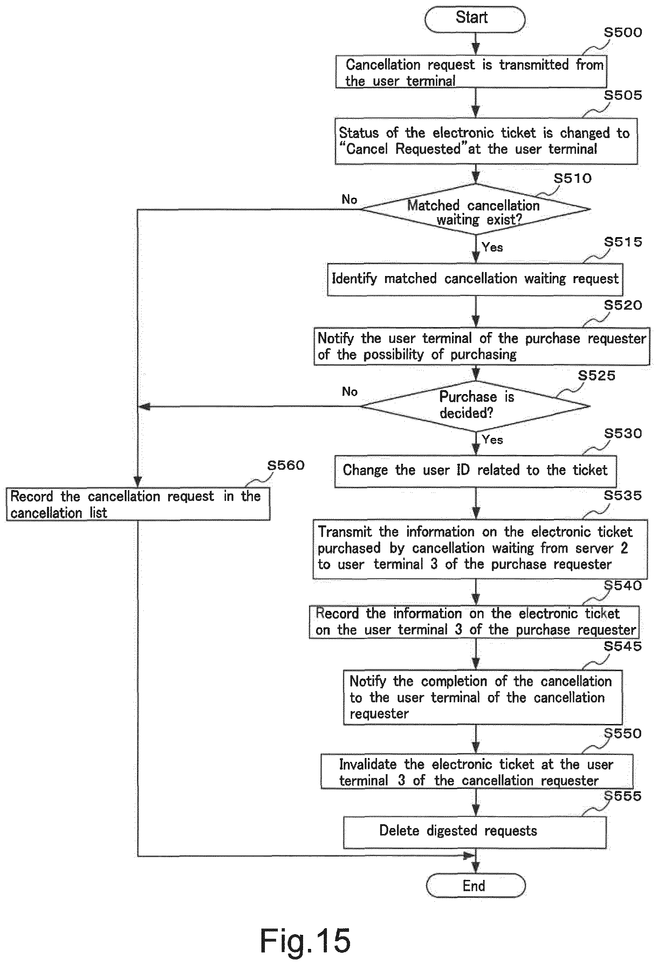

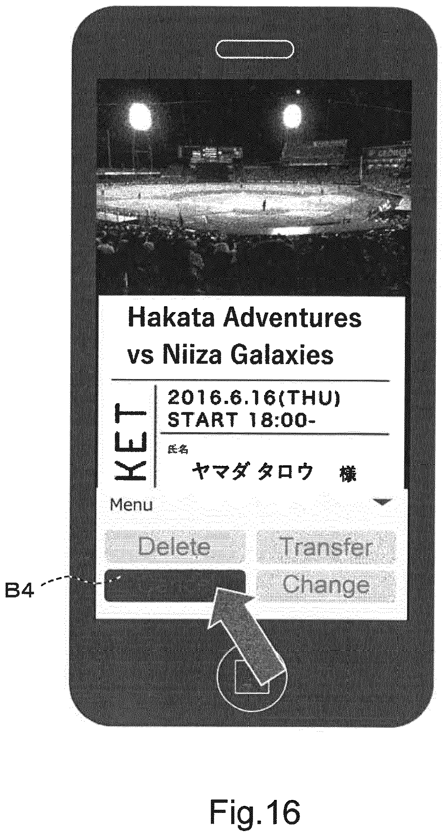

FIG. 15 is a flowchart showing a processing procedure of the electronic ticket system 1 when the cancellation of the purchased electronic ticket is accepted. The electronic ticket of the exhibition permitting the cancellation according to the present system is configured such that when the ticket face is displayed by the electronic ticket application, a cancel button B4 for applying for the cancellation is displayed as shown in FIG. 16. The cancel button B4 may be constantly displayed together with the ticket face, or may be displayed only when a predetermined operation is performed. When the user wishes to cancel the electronic ticket (hereinafter, the user is referred to as a cancellation requester), the cancellation requester make the user terminal 3 display the electronic ticket desired to be cancelled by the electronic ticket application, and transmits a cancellation request from the user terminal 3 of the cancellation requester to the server 2 by pressing the cancel button B4 (step S500). In order to prevent the cancellation request from being transmitted by an unintentional touch on the cancel button B4, it is preferable to display an interface for confirming whether or not the user really wants to cancel after the cancel button B4 is pressed, and to transmit the cancellation request to the server 2 only when the user selects the request. Instead of displaying the cancel button B4 together with the ticket face, the cancel button B4 may be displayed on a list screen on which a plurality of purchased electronic tickets can be selected. In this case, when the cancel button B4 is pressed in a state in which several electronic tickets are selected on the list screen, cancellation can be applied for the selected electronic tickets collectively.

When a cancellation request is transmitted, the user terminal 3 makes the status of the electronic ticket "Cancel Requested" (step S505). The electronic ticket whose status is "Cancel Requested" cannot be deleted even if it is displayed by the electronic ticket application. When the electronic ticket whose status is "Cancel Requested" is displayed by the electronic ticket application, the fact that the cancellation request is being made may be displayed, and an interface for canceling the cancellation request may be displayed. When the operation of canceling the cancellation request is performed on the interface, the user terminal 3 requests cancel of the cancellation request for the electronic ticket to the server 2, and the server 2 deletes the cancellation request for the electronic ticket from the cancellation request list on condition that the cancellation waiting request has not yet been assigned to the cancellation request. When the server 2 completes the deletion of the cancellation request, the server 2 notifies the user terminal 3 of the cancellation requester to that effect. When the user terminal 3 receives the notification, the user terminal 3 returns the status of the electronic ticket to "Unused" and makes it possible to be deleted by the electronic ticket application.

Server 2, on receipt of a cancellation request, queries the cancellation waiting list for a cancellation request whose condition matches the received cancellation request (step S510). When there is a cancellation waiting request whose condition matches (step S510; YES), the server 2 identifies the cancellation waiting request whose condition matches as a matched cancellation waiting request (step S515). When there are a plurality of cancellation requests whose conditions match, the matched cancellation waiting request may be specified by giving priority to a cancellation waiting request having an earlier reception date and time, performing a lottery, or the like. Then, the server 2 notifies the user terminal 3 of the purchase requester that it can be purchased regarding the matched cancellation request (step S520) and confirms the purchase intention of the purchase requester(step S525). The steps for confirming the purchase intention of the purchase requester (steps S520 and S525) may be omitted. At the user terminal 3 of the purchase requester, a display and operational interface for the purchase decision (and, if necessary, fee settlement) is provided upon receipt of a notice that the purchase can be made from the server 2 by an electronic ticket application. If the purchase is not decided by the purchase requester (step S525; No), the process proceeds to step S560. On the other hand, when the purchase decision (and fee settlement) is performed by the purchase requester (step S525; yes), it is transmitted to Server 2. When the server 2 confirms the purchase decision (and fee settlement), the user ID of the electronic ticket corresponding to the cancellation request is changed from the user ID of the cancellation requester to the user ID of the purchase requester (step S530). In addition, the server 2 transmits information of the electronic ticket (ticket ID, exhibition ID, exhibition name, date and time, ticket type, seat number, deletion key, face image, etc.) similar to information transmitted when the electronic ticket is purchased in a normal manner, together with the notification of the completion of the purchase to the user terminal 3 of the purchase requester (step S535). The user terminal 3 of the purchase requester which has received the information records the information of the purchased electronic tickets as status of which is "Unused" in the storage unit 302 (step S540). In step S545, the server 2 sends a notice of cancel completion to the user terminal 3 of the cancellation requester. The user terminal 3 of the cancellation requester sets the status of the electronic tickets to "Canceled" (S550). In the electronic ticket application, for example, the electronic ticket whose status is "Canceled" is not displayed thereafter, so that cancellation of the cancellation request is not possible. Server 2 deletes cancellation waiting requests and cancellation requests digested by reselling (step S555) from the cancellation waiting list and the cancellation request list, and terminates the process. Whether or not to refund the price of the initially purchased electronic ticket to the cancellation requester is arbitrary.

On the other hand, if there is no cancellation waiting request that matches the condition (step S510; no.), the server 2 records the ticket ID, the user ID of the cancellation requester, and the date and time when the cancellation request was received in the cancellation request list (step S560) for the received cancellation request, and terminates the process.

With the configuration described above, the electronic ticket system 1 can smoothly transfer an electronic ticket from a user who desires to cancel an electronic ticket to a user who desires to wait for cancellation. Further, since the user who wishes to cancel and the user who wishes to wait for cancel can transfer without knowing each other, it is possible to prevent unauthorized transfer (for example, to request an unreasonable fee in return for transfer). In other words, by preventing normal delivery, resale can be suppressed, and rescue measures can be provided for a person who is really unable to go. In addition, unlike paper or a membership card, by using the electronic ticket system 1, it is possible to wait for cancellation or accept cancellation in real time,

In the above-described example, the cancellation requester may be able to send the cancellation request only when the purchase requester exists. In this case, when the cancellation requester presses the cancel button B4, the electronic ticket application of the user terminal 3 may inquire of the server 2 whether or not the registration is made in the cancellation waiting list, and only when there is a cancellation waiting request, an interface for confirming the cancel intention may be displayed on the display unit 305. Alternatively, it is preferable that the electronic ticket application of the user terminal 3 inquires of the server 2 whether or not there is registration in the cancellation waiting list, and the cancel button is operated (enabled) only when there is a cancellation waiting request.

In the above example, cancellation is performed only when a cancellation waiting request is assigned to a cancellation request, but cancellation may be permitted even if a cancellation waiting request is not assigned. For example, when the cancellation requester agrees to pay the cancel fee, the cancel is permitted, and the server 2 may set the user ID as a blank for the electronic ticket canceled without the cancellation waiting request being allocated.

In addition, the promoter side may be configured to forcibly disable the electronic ticket when the exhibition is canceled or the like. When the electronic ticket forcibly disabled by the promoter is displayed by the electronic ticket application of the user terminal 3, it is particularly preferable that an interface for determining a post-treatment such as a refund or reception of an alternative ticket is displayed on the display unit 305. For example, a button for selecting a refund, a substitute ticket, or the like may be displayed, and when this button is pressed, the user terminal 3 may send a request for a refund or a substitute ticket together with personal information, ticket information, or the like to the server 2. In the case of requesting a refund, information on a refund method (e.g., bank transfer, window receipt, credit card refund, etc.) may be specified.

### [Swap]

The electronic ticket system 1 may provide a function of allowing electronic tickets to be swapped between users who have purchased electronic tickets of different ticket types. Hereinafter, a specific configuration example for providing such a function will be described.

In the electronic ticket system 1 providing the above functions, the server 2 stores a swap request list in the storage unit 201. The swap request list stores a user ID of a user who wishes to exchange a ticket (hereinafter, this user is referred to as a swap desired person), information of an electronic ticket held by the swap desired person, terms of the electronic ticket desired to be exchanged, and a date and time when the swap request is received in association with each other.

### [Upon receipt of a swap request]

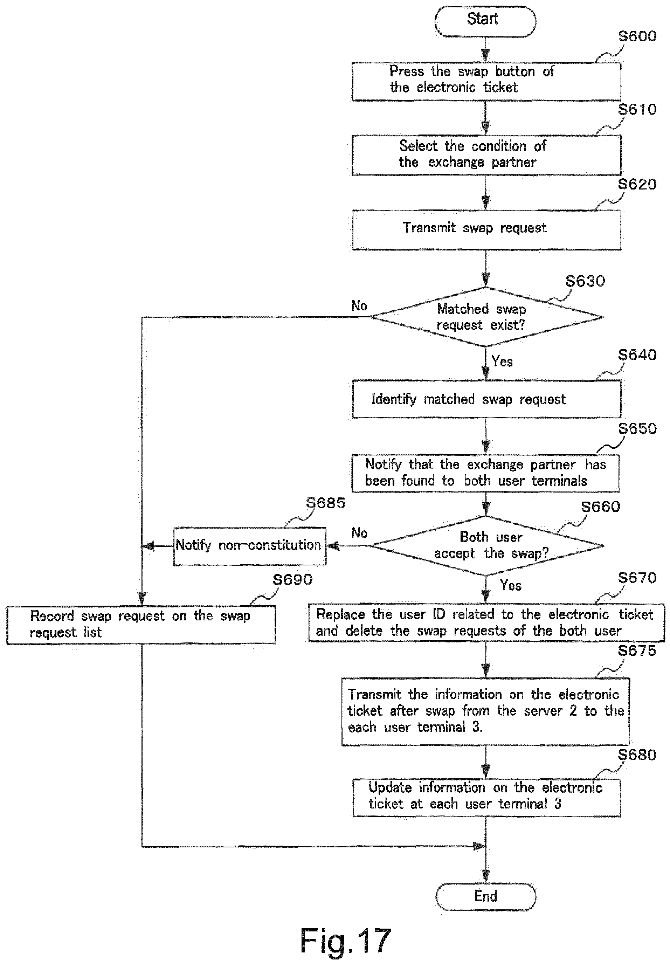

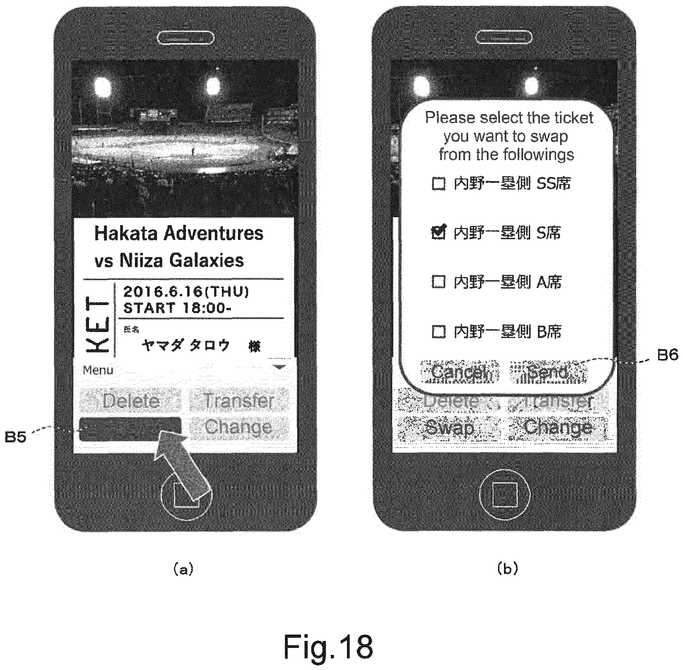

FIG. 17 is a flowchart showing a processing procedure of the electronic ticket system 1 when a request to swap a purchased electronic ticket is received. In the example described here, it is assumed that only electronic tickets before the deletion can be swapped. When an electronic ticket of an exhibition permitting a swap according to the present system is displayed by an electronic ticket application, a swap button B5 for applying for a swap is displayed as shown in FIG. 18(a). When the user wishes to swap the electronic ticket with another electronic ticket, the swap requester displays the electronic ticket desired to be swapped by the electronic ticket application on the user terminal 3, and presses the swap button B5 (step S600). In response to this operation, the user terminal 3 displays a screen for inputting the condition of the electronic ticket desired to be exchanged. Specifically, for example, as shown in FIG. 18(b), a list of electronic tickets that can be exchanged with the electronic ticket is selectably displayed on the display unit 305 (step S610).

When the swap requester selects an electronic ticket from the list and presses the send request button B6, the user terminal 3 of the swap requester transmits a swap request to the server 2 (step S620). When a swap request is sent, the user terminal 3 sets the status of the electronic ticket as "Swap Requested." The electronic ticket whose status is "Swap Requested" cannot be deleted even if displayed by the electronic ticket application. When the electronic ticket whose status is "Swap Requested" is displayed by the electronic ticket application, the fact that the swap request is being made may be displayed, and an interface (for example, a cancel button) for canceling the swap request may be displayed. When the operation of canceling the swap request is performed on the interface, the user terminal 3 requests the server 2 to cancel the swap request for the electronic ticket, and the server 2 deletes the swap request for the electronic ticket from the swap request list on condition that the other swap request has not yet been assigned to the swap request. When the server 2 completes the deletion of the swap request, it notifies the user terminal 3 of the desired swap user to that effect. When the user terminal 3 receives the notification, the user terminal 3 returns the status of the electronic ticket to "Unused" and makes it possible to be deleted by the electronic ticket application.

Server 2, on receipt of a swap request, queries the swap request list for other swap requests that meet the conditions in the received swap request (step S630). If there is no swap request whose condition is met (step S630; No), the server 2 records the received swap request in the swap request list in association with the ticket ID, the user ID of the user who wishes to swap, and the date and time when the swap request was received (step S630: No).

On the other hand, when there is other swap request whose condition matches (step S630; YES), the server 2 identifies the other swap request as the swap request of the exchange partner (step S640). When there are a plurality of other swap requests whose conditions match, the swap request of the exchange partner may be specified by giving priority to a swap request having an earlier reception date and time, performing a lottery, or the like. Then, the server 2 notifies the user terminal 3 of the swap requester of the swap request and the exchange partner of the fact that the exchange partner has been found (and information on the exchange partner's tickets) (step S650), and confirms the swap applicant's intention to accept the swap (step S660). At the user terminal 3 of each swap requester, when the electronic ticket application receives a notice from the server 2 that an exchange partner has been found, it provides a display and operation interface for confirming the intention to accept the swap (and, if necessary, for payment of fees).

When the operation for accepting the swap (and fee settlement) is performed by a swap requester, each user terminal 3 transmits the fact to the server 2. After confirming the intention of both swap requesters to accept the swap (step S660; Yes), server 2 replaces the user ID of the electronic ticket corresponding to the received swap request with the user ID of the electronic ticket corresponding to the swap request of the exchange partner, and deletes the swap request of the exchange partner from the swap request list (step S670). Steps for confirming the intention to accept the swap (step S660) may be omitted. In addition, the server 2 transmits information on the ticket after the swap (e.g., ticket ID, exhibition ID, exhibition name, date and time of the event, ticket type, seat number, deletion key, ticket face image, etc.) to the user terminal 3 of the applicant for both swaps together with the notice of completion of the swap (step S675). The user terminal 3 of the swap requester who has received the information records the information of the electronic tickets after the swap as status of which is "Unused" in the storage unit 302 (step S680), and the process ends.

When at least one swap applicant does not approve the swap (step S660; No), the server 2 notifies the user terminals 3 of both swap requesters that the swap has not been completed (step S685), adds the received swap requests to the swap request list (step S690), and ends the process. When the user terminal 3 of each swap requester receives the notification that the swap has not been established, it is preferable to display the notification on the display unit 305.

In the above example, the swap button B5 may be displayed on a list screen on which a plurality of purchased electronic tickets can be selected, and when the swap button B5 is pressed in a state in which a number of electronic tickets are selected on the list screen, a swap request for the selected electronic tickets can be made collectively.

With the above-described configuration, the electronic ticket system 1 can match the request of the user who desires to swap the electronic ticket, and can smoothly exchange the electronic ticket. In addition, since users who wish to swap can transfer without knowing each other, it is possible to prevent unauthorized transfer (for example, to request an unreasonable fee in return for exchange).

In the above example, a list of tickets of a ticket type different from that of a ticket held by a person who wishes to swap is displayed as a list of electronic tickets that can be exchanged when the swap button is pressed, but a ticket of the same type may also be included in an electronic ticket that can be exchanged. In addition, the type of ticket in which the swap request has already been recorded in the swap request list may be displayed so as to be identifiable. In addition, electronic tickets of different exhibitions, such as different dates, may be included in electronic tickets that may be exchange partners.

In the above example, only the electronic ticket before the deletion is swapped, but the electronic ticket after the deletion may be swapped. In this case, it is preferable to select only the electronic ticket after the deletion for the same exhibition as the exchange partner.

### [Yield Analysis, Reporting Result]

In the electronic ticket system 1, it is preferable to provide useful information by acquiring the behavior of the user who purchased the electronic ticket and the state of entry, or by predicting the transition thereof. Hereinafter, a specific configuration example for providing such a function will be described.

In an example of the electronic ticket system 1 providing the above-described behavior acquiring/analysis function, the user terminal 3 periodically acquires position information by the position information acquiring unit 306 provided in the user terminal 3, and transmits the position information to the server 2. The server 2 may estimate the possibility that each user can reach the venue by the opening time based on the current position of each user terminal 3, the position of the venue, the current time, and the opening time. Further, in the electronic ticket system 1 configured to be able to cancel the electronic ticket, the server 2 may transmit a notification (e.g., a message using SNS, e-mail, or the like) for prompting cancellation to the user terminal 3 of the user who is determined to have a low possibility of reaching the venue by the opening time. The server 2 may estimate the movement state of the user based on the position information of the user terminal 3 at a plurality of times. Then, when it is estimated that the user is not moving toward the venue at a predetermined timing (e.g., a predetermined time before the opening time), it is preferable to transmit a notification (e.g., a message using SNS, e-mail, or the like) for prompting cancellation to the user terminal 3 of the user.

In another example of the electronic ticket system 1 providing the behavior acquiring/analysis function, the server 2 may calculate and display the yield rate obtained by dividing the number of attendances by the number of seats, and may predict and display the transition of the yield rate based on the number of users waiting to enter in the entrance waiting area, the position and number of users moving toward the venue, the entrance processing speed at the entrance, and the like. By predicting and displaying the transition of the yield rate, it is possible to provide the organizer with a basis for decision whether or not to delay the opening time until the yield rate is sufficiently increased. In addition, the attributes of visitors, the speed of admission processing, the number of visitors and the processing speed for each entrance, the presence or absence of simultaneous visitors (accompanies), the attributes, and the like may be analyzed and displayed in real time or after the fact. For example, depending on the admission processing speed, a decision can be made as to whether or not to increase attendant at an entrance where the processing speed is slow, for example.

In another example of the electronic ticket system 1 providing the behavior acquiring/analysis function, the user may be evaluated based on the purchase history of the electronic ticket, the usage history of the purchased electronic ticket, the usage rate of the purchased electronic ticket (the ratio of the electronic ticket used by the user to the purchased electronic ticket), and the like. Benefits and penalties may be provided according to the level of evaluation. Further, the possibility of a fraudulent act may be estimated based on the use history and the history of the position information. For example, a user who has cancelled or swapped an electronic ticket without entering despite having reached the area around the venue of the exhibition of which he/she purchased an electronic ticket at a time zone where they can enter, or a user who purchases a plurality of electronic tickets and transfers the accompaniment to another person at a high price and enters the venue with the other person (or a user who repeats these actions) may be evaluated as a potential illegal user. In accordance with the evaluation, it is preferable to impose penalties such as checking the identity at the entrance, prohibiting the sale of tickets, prohibiting the entry and exit of tickets, and the like.

### [Provide Information to Ticket Purchaser]

The electronic ticket system 1 may have a function of providing various types of information such as advertisements, guidance, coupons, and tickets to a user who has purchased an electronic ticket at various timings after the purchase. The various types of information may be transmitted from the server 2 to the user terminal 3 for purchasing the electronic ticket. Further, the various information may be displayed when the ticket face of the electronic ticket is displayed by the electronic ticket application, or various information relating to the purchased electronic ticket may be displayed independently of the ticket face display. In addition, various information regarding electronic tickets that have been purchased by e-mail or SNS may be sent without using the electronic ticket application.

For example, a purchase button for a related product, ticket, beverage, or the like may be displayed on the ticket face of an electronic ticket displayed by the electronic ticket application, and the product or the like may be purchased by tapping the purchase button. In addition, when a specific condition such as sharing of exhibition information or the like is satisfied, various rewards such as discount coupons, provision of free goods, lottery rights, and the like may be obtained.

When purchasing a merchandise from the ticket face of the electronic ticket, when the purchase button is pressed, the seat information together with the order content may be transmitted to the terminal of the sales booth or the selling terminal. In this manner, a salesperson or a seller of the sales booth can refer to the seat information and deliver the merchandise to the seat. When purchasing a merchandise from a ticket face of an electronic ticket, the price of merchandise may be settled by, for example, a credit card or a prepaid function. This eliminates the need for the transfer of cash in the seats and facilitates the transfer of goods in crowded venues. Further, when purchasing a product from the ticket face, not only the product but also a seller may be designated. In this way, the purchaser can receive goods from a preferred seller. In addition, the seller can be encouraged to improve service to increase his/her own sales.

In addition, in a configuration in which goods can be purchased by pressing the purchase button of the goods from the ticket face, it is preferable to provide a receipt confirmation button of the goods so that the receipt confirmation can be performed when the purchased goods are received. In addition, a receipt may be issued in response to the receipt confirmation button being pressed.

### [Modifications of the Embodiments]

The embodiments of the present invention have been described above, but the present invention is not limited to these examples. For example, in the above-described embodiment, an admission ticket for an exhibition such as an event or the like is assumed as an application target of the electronic ticket, but the present invention is also applicable to tickets other than the exhibition ticket. For example, the electronic ticket system of the present invention may be applied to tickets in transportation such as train tickets, express tickets, various tickets for designated seat tickets, airplane boarding tickets, and the like. When the tickets are applied to tickets in transportation, it is understood that the name of train (e.g., Nozomi 123, etc.) and the convenience name of airplane (e.g., JAL123 service, etc.) correspond to the exhibition in the above embodiment, and the type of train and airplane seat (e.g., green car, designated seat, first class, business class, economy class, etc.) correspond to the type of ticket, and it is also within the scope of the present invention that a person skilled in the art may appropriately add, delete, and modify the designs of the constituent elements to the above embodiment, and that the features of the embodiments are appropriately combined as far as the gist of the present invention is provided.

### Reference Signs List

- 1: Electronic ticket system
- 2: Server
- 3: User terminal
- 4: Stamp
- NW: Network

## Claims

1. A program used in an electronic ticket system comprising:
a user terminal provided with display means for displaying the face of an electronic ticket; and
a deletion means for deleting the electronic ticket selected on the user terminal,
said program causes the user terminal to realize a function of changing a face of the electronic ticket to be displayed on the display means.

2. The program according to claim 1, wherein when the electronic ticket is deleted, the face of the electronic ticket displayed on the display means is changed.

3. The program according to claim 2, wherein the electronic ticket is an electronic ticket to which a designated seat is linked, and
wherein the information of the designated seat is not included in the ticket face of the electronic ticket displayed on the display means before the electronic ticket is deleted, and the information of the designated seat is included in the ticket face of the electronic ticket after the electronic ticket is deleted.

4. The program according to claim 3, wherein the designated seat associated with the electronic ticket to be deleted is determined by lottery on condition that the electronic ticket is deleted, and
wherein the designated seat determined by lottery is included in the ticket face of the electronic ticket displayed on the display means after the electronic ticket is deleted.

5. The program according to claim 2, wherein the electronic ticket is an electronic ticket of a designated seat to which the designated seat is linked,
and wherein the information of the designated seat is displayed on the face of the electronic ticket displayed on the display means after the electronic ticket is deleted so as to be more easily visible than the face of the electronic ticket displayed on the display means before the electronic ticket is deleted.

6. The program according to any one of claims 1 to 5, wherein the face of the electronic ticket to be displayed on the display means is changed at a predetermined time.

7. The program according to any one of claims 1 to 6, wherein the user terminal includes a position information acquiring means for acquiring a current position,
the face of the electronic ticket to be displayed on the display means is changed on condition that the current position matches the condition of the predetermined position.

8. The program according to any one of claims 1 to 7, wherein the user terminal further includes receiving means for receiving an instruction to change the face of the electronic ticket from the outside, and
wherein the user terminal changes the face of the electronic ticket to be displayed on the display means on condition that the user terminal receives the instruction.

9. The program according to any one of claims 1 to 8, wherein a moving image is displayed on a ticket face to be displayed on the display means when the deleting is performed by the deletion means.
